# EUROPÄISCHE PATENTSCHRIFT

(11) **EP 1 245 842 B1**
(45) Veröffentlichungstag und Bekanntmachung des Hinweises auf die Patenterteilung: **28.04.2004**
(21) Anmeldenummer: 02014829.2
(22) Anmeldetag: 05.07.1996
(51) Int. Cl.: F16B 41/00, F16B 43/00, F16B 5/02, F16B 1/00

(54) **Befestigerzusammensetzung**
Fastening device
Dispositif de fixation

(30) Priorität: 14.07.1995 DE 29511400 U
(43) Veröffentlichungstag der Anmeldung: 02.10.2002
(62) Teilanmeldung aus: 96110905.5
(73) Patentinhaber: ITW BEFESTIGUNGSSYSTEME GmbH, 58611 Iserlohn (DE)
(72) Erfinder: Kirchhoff, Peter, 58749 Wickede (DE)
(74) Vertreter: Patentanwälte Hauck, Graalfs, Wehnert, Döring, Siemons, Schildberg

(56) Entgegenhaltungen:
- CH-A- 442 388
- DE-C- 4 310 002
- US-A- 5 020 951
- US-A- 5 255 647

## Beschreibung

Die Erfindung bezieht sich auf eine Befestigerzusammensetzung zum Verbinden eines ersten Werkstückes mit einer Bohrung und eines zweiten Werkstückes mit einer Gewindebohrung nach dem Oberbegriff des Anspruches 1 (US 5 255 647 A).

Befestigerzusammensetzungen der eingangs genannten Art dienen insbesondere der Befestigung von Ventildeckeln an Zylinderköpfen von Verbrennungsmotoren. Die Axialverschieblichkeit der Schraube in der Hülse begünstigt die Montage des ersten und des zweiten Werkstückes. Das erste Werkstück kann nämlich mit darin vormontierter Befestigerzusammensetzung auf dem zweiten Werkstück plaziert werden, ohne daß die Befestigerzusammensetzung oder auch nur die Schraube aus dem ersten Werkstück herausgedrückt wird. Die Axialverschieblichkeit des Schaftes in der Hülse ermöglicht nämlich ein Ausweichen der aus dem ersten Werkstück herausragenden Schraube vor dem zweiten Werkstück, wobei die Hülse bzw. die Durchführung ihren Sitz im ersten Werkstück beibehalten kann. Zugleich ist die Schraube durch ihre unverlierbare Anbringung in der Hülse gesichert, so daß die Befestigerzusammensetzung nicht zerfällt.

Aus der EP-B1-0 272 642 ist eine Befestigerzusammensetzung der eingangs erwähnten Art bekannt, bei der zur unverlierbaren Anbringung der Schraube in der Hülse auf dem Schaft in einem Abstand vom Kopf mehrere Vorsprünge angeordnet sind. Den Vorsprüngen ist ein verkleinerter Innendurchmesser der Hülse in Form eines nach innen gerichteten Wulstes unterhalb eines kopfseitigen Flansches zugeordnet. Folglich ist die Hülse auf dem Schaft verschiebbar, bis der Wulst gegen die Vorsprünge stößt. Außen auf der Hülse sitzt eine Durchführung aus Gummi, die einer elastischen Abstützung am ersten Werkstück dient.

Bei dieser Befestigerzusammensetzung erfordert die Herstellung der Vorsprünge auf den Schraubenschaft durch Rändeln einen erhöhten Aufwand, der sich in den Kosten niederschlägt. Auch die Herstellung der Hülse ist aufwendig, weil sie zum Erzeugen des Wulstes von der kopfabgewandten Seite her innen aufgeweitet werden muß. Außerdem ist die relativ lange Hülse nicht durch ein Tiefziehverfahren herstellbar bzw. kann der große Flansch nicht durch ein Rohrendbearbeitungsverfahren angebracht werden. Ferner kann es beim Einsatz der Befestigerzusammensetzung im Feuchtebereich infolge von Unebenheiten in den Flanschen zu Undichtigkeiten der Verbindung kommen. Zwischen einem kleinen Fußflansch der Hülse und dessen Aufstandsfläche auf dem zweiten Werkstück kann nämlich Medium eintreten und zwischen dem kopfseitigen Flansch der Hülse und dem Kopf der Schraube wieder austreten. Zudem ist nachteilig, daß bei der Montage ein Flansch der Hülse durch das Gummi der Durchführung gepreßt werden muß. Die Aufweitung des Gummis ist jedoch durch die Bildung von Rissen begrenzt, so daß der durchzupressende Flansch einen bestimmten Durchmesser nicht überschreiten darf. Die Anforderungen können daher von dieser Befestigerzusammensetzung nicht immer erfüllt werden.

Davon ausgehend liegt der Erfindung die Aufgabe zugrunde, eine unter verringertem Aufwand herstellbare Befestigerzusammensetzung zu schaffen.

Die Aufgabe wird durch eine Befestigerzusammensetzung mit den Merkmalen des Anspruches 1 gelöst. Vorteilhafte Ausgestaltungen derselben sind in den Unteransprüchen angegeben.

Bei der erfindungsgemäßen Befestigerzusammensetzung hat die Hülse an ihrem kopfseitigen Ende radiale Öffnungen, die von Vorsprüngen der Durchführung durchgriffen werden, welche in die Hülse hineinragen und im Bereich des oberen Schaftabschnittes das Gewinde der Schraube hintergreifen. Somit ermöglichen die Vorsprünge, die Hülse von einer kopfnahen Position, in der so weit wie möglich an den Kopf der Schraube herangeschoben ist, in eine kopfferne Position zu verschieben, in der die Vorsprünge gegen das Gewinde der Schraube treffen und ein weiteres Verschieben verhindern. Eine relative Verschieblichkeit von Hülse bzw. Durchführung zur Schraube unter Sicherung dieser Bauteile aneinander wird somit erreicht, ohne daß in aufwendiger Weise die Schraube mit Vorsprüngen und die Hülse mit einem Wulst versehen werden müßten. Ferner ist die Hülse mit den Öffnungen einfacher als die Hülse mit Aufweitung herstellbar. Auch kann die Durchführung aus elastomerem Material mit den Vorsprüngen am Innenumfang einfach hergestellt werden. Eine fertige. Durchführung kann nachträglich auf der Hülse montiert werden. Die Durchführung ist aber auch durch Umspritzen der Hülse herstellbar, so daß eine Montage der Durchführung entfällt. Als Material für die Durchführung kommt insbesondere Gummi oder ein thermoplastisches Elastomer in Betracht, das im Spritzgußverfahren verarbeitet werden kann. Infolge der Elastizität der Vorsprünge ist die Hülse auch mit einer darauf sitzenden Durchführung leicht auf den Schaft der Schraube montierbar.

Die Vorsprünge können verschiedene geometrische Formen aufweisen. Zum Beispiel kann die Durchführung mehrere auf dem Innenumfang verteilte Noppen haben. Die Vorsprünge können aber auch im Inneren der Hülse durch einen Ring aus elastomerem Material verbunden sein, der als Dichtring eine Abdichtung zwischen dem gewindefreien Schaft der Schraube und der Hülse bewirken kann. Der Schraubenschaft kann direkt unterhalb des Kopfes eine Verdickung haben, auf der sich die Vorsprünge bei kopfnaher Lage der Hülse zusammengepreßt und damit unter erhöhter Dichtwirkung abstützen.

Die Hülse kann einfach gemäß den Anforderungen am Fußende mit einem Flansch versehen sein. Ferner kann die Hülse ein Rohrabschnitt sein, der eine ausreichend dicke Wand für eine direkte Abstützung auf dem zweiten Werkstück aufweisen kann.

Die dem Kopf zugewandte Stirnseite der Durchführung hat erfindungsgemäß mindestens eine umlaufende Dichtlippe, die sich dichtend gegen die Unterseite des Kopfes legt.

Nachfolgend wird die Erfindung anhand einiger Ausführungsbeispiele mit Bezug auf die anliegenden Zeichnungen näher beschrieben. In den Zeichnungen zeigen:
- Fig. 1 und 2: Befestigerzusammensetzung mit kopfseitigem Hülsenflansch im Längsschnitt (Fig. 1) und in der Draufsicht (Fig. 2) gemäß der Stammanmeldung;
- Fig. 3 und 4: die Durchführung desselben Befestigers im Längsschnitt (Fig. 3) und in der Draufsicht (Fig. 4);
- Fig. 5 und 6: Befestigerzusammensetzung mit einer Scheibe im Längsschnitt (Fig. 5) und in der Draufsicht (Fig. 6) gemäß der Stammanmeldung;
- Fig. 7 und 8: Befestigerzusammensetzung mit vergrößertem Kopf im Längsschnitt (Fig. 7) und in der Draufsicht (Fig. 8);
- Fig. 9 und 10: Befestigerzusammensetzung mit Rohrabschnitt als Hülse im Längsschnitt (Fig. 9) und in der Draufsicht (Fig. 10), gemäß der Stammanmeldung;
- Fig. 11 und 12: Befestigerzusammensetzung mit Verdickung unter dem Schraubenkopf im Längsschnitt (Fig. 11) und in der Draufsicht (Fig. 12), gemäß der Stammanmeldung.

Nachfolgend werden für übereinstimmende Merkmale verschiedene Befestigerzusammensetzungen identische Bezugsziffern verwendet.

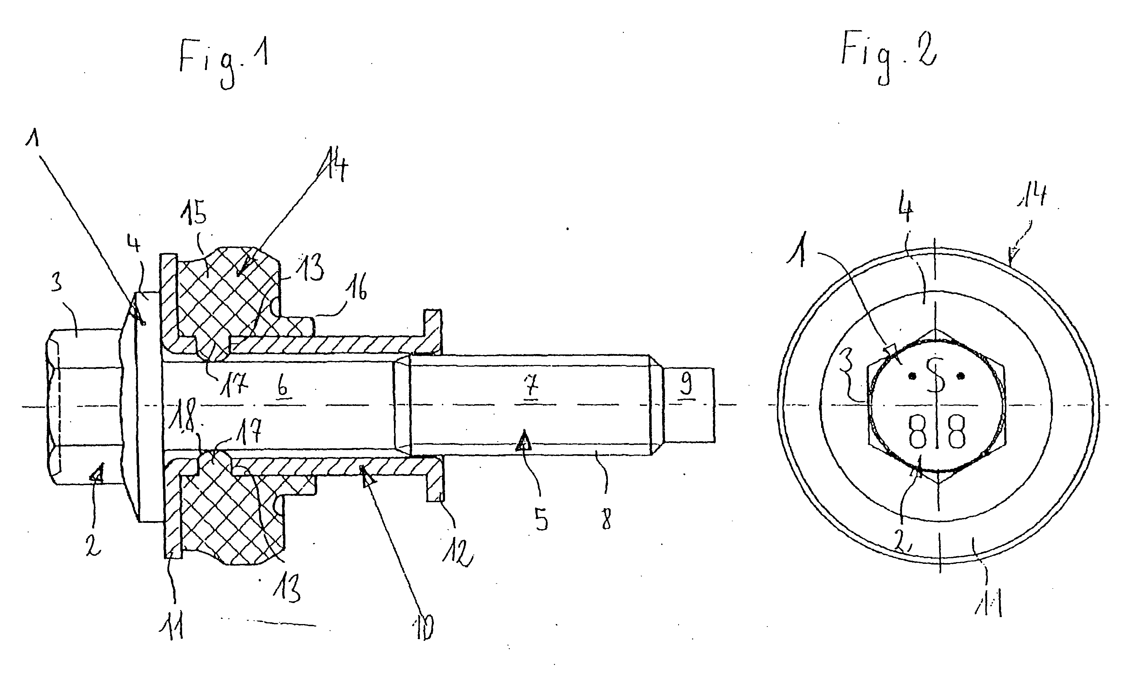

Die Befestigerzusammensetzung gemäß Fig. 1 bis 4 hat eine Schraube 1, die einen Kopf 2 mit einem Sechskant 3 oder einem anderen Antrieb und einer Klemmschulter 4 aufweist. Mit dem Kopf 2 ist ein Schaft 5 verbunden, der einen oberen, gewindelosen Schaftabschnitt 6 und einen unteren Schaftabschnitt 7 mit einem Gewinde 8 aufweist. Der Außendurchmesser des Gewindes 8 ist größer als der Durchmesser des oberen Schaftabschnittes 6. Entgegengesetzt zum Kopf 2 hat der Schaft 5 im Bereich eines kurzen zylindrischen Einführabschnittes 9 seinen geringsten Durchmesser.

Auf dem Flansch 5 sitzt eine zylindrische Hülse 10, deren Außendurchmesser geringfügig den Außendurchmesser des Gewindes 8 überschreitet, so daß sie leicht über den Schaft 5 schiebbar ist. An ihrem kopfseitigen Ende hat die metallische Hülse 10 einen großen Flansch 11, der an der Unterseite der Klemmfläche 4 anliegt. An ihrem fußseitigen Ende ist die Hülse 10 mit einem kleineren Flansch 12 versehen.

Nahe des Flansches 11 weist die Hülse 10 zwei einander diametral gegenüberliegende, radiale Öffnungen oder Durchbohrungen 13 auf. Aufgrund einer Herstellbarkeitsprüfung kann auch eine andere Anzahl Durchbohrungen 13 in Betracht kommen.

Unterhalb des Flansches 11 sitzt auf der Hülse 10 eine Durchführung 14 aus einem elastomeren Material. Die Durchführung 14 hat einen ringscheibenförmigen Abschnitt 15, der sich stirnseitig am Flansch 11 abstützt. An der entgegengesetzten Stirnseite ist die Durchführung 14 mit einer Manschette 16 versehen.

Die Manschette 16 sowie der ringförmige Abschnitt 15 liegen innen eng an der zylindrischen Hülse 10 an. Der ringförmige Abschnitt 15 hat innen zwei Vorsprünge 17, die durch die Öffnungen 13 hindurchtreten und in die Hülse 10 hineinragen.

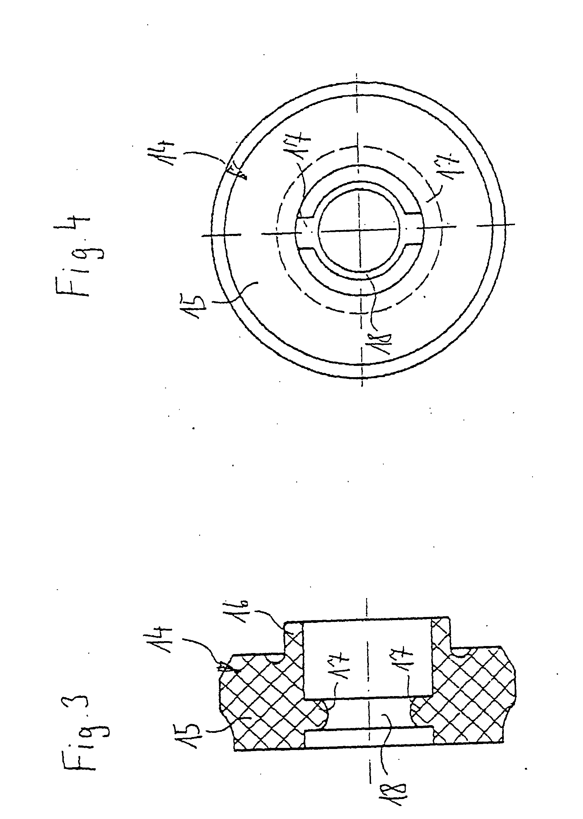

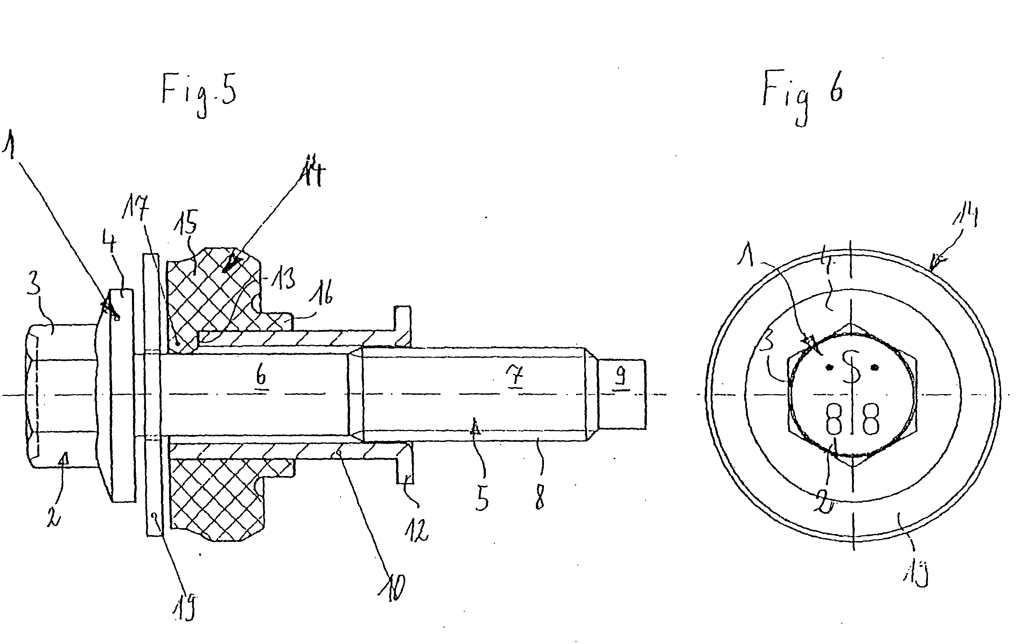

Wie besser aus den Fig. 3 und 4 ersichtlich ist, sind die einander diametral gegenüberliegenden Vorsprünge 17 an ihren inneren Enden von einem umlaufenden Ring 18 verbunden. Die gesamte Durchführung 14 aus ringförmigem Abschnitt 15, Manschette 16, Vorsprüngen 17 und Ring 18 besteht aus demselben elastomeren Material.

Der Innendurchmesser des Ringes 18 ist kleiner als der Außendurchmesser des Gewindes 8 und etwa gleich groß oder etwas kleiner als der Durchmesser des oberen Schaftabschnittes 6. Infolgedessen liegt die Durchführung 14 mit ihrem Ring 18 dichtend am oberen Schaftabschnitt 6 an.

Die Flansche 11, 12 sind mittels üblicher Fertigungsverfahren (z.B. Tiefziehverfahren, Rohrendbearbeitungsverfahren, Fertigung als Drehteil) an der Hülse 10 ausgebildet. Die Durchführung 14 ist um die Hülse 10 gespritzt. Danach ist die Hülse 10 mit der Durchführung 14 unter Verformung des Ringes 18 über den Schaft gedrückt, bis der Ring 18 den oberen Schaftabschnitt 6 erreicht. Dann ist die Befestigerzusammensetzung für die Verbindung zweier Werkstücke bereit.

Bei der Verbindung zweier Werkstücke ist die Durchführung 14 im ersten Werkstück abgestützt und die Hülse 10 durch eine Durchbohrung desselben erstreckt. Ihr kopfseitiger Flansch 11 ist an der Oberseite des ersten Werkstückes angeordnet und ihr fußseitiger Flansch 12 im Bereich seiner Unterseite, wobei er vorzugsweise auf einem zweiten Werkstück abgestützt ist. Beim Aufsetzen der im ersten Werkstück vormontierten Befestigerzusammensetzung auf das zweite Werkstück kann die Schraube 1 in der Hülse 10 verrutschen, bis das Gewinde 8 gegen den Ring 18 stößt, so daß die Befestigerzusammensetzung bzw. die Schraube 1 nicht aus dem ersten Werkstück herausgedrückt wird. Wenn das erste Werkstück korrekt auf dem zweiten plaziert ist, kann die Schraube 1 mit ihrem unteren Schaftabschnitt 7 und dem darauf befindlichen Gewinde 8 in die Gewindebohrung des zweiten Werkstückes eingedreht werden.

Der Ring 18 befestigt nicht nur die Hülse 10 auf der Schraube 1, sondern dichtet zugleich den Spalt zwischen Schaft 5 und Hülse 10 ab.

Bei der Befestigerzusammensetzung gemäß Fig. 5 und 6 hat die Hülse 10 nur einen fußseitigen Flansch 12 und ist nicht mit einem kopfseitigen Flansch versehen. Statt dessen ist auf dem oberen Schaftabschnitt eine Unterlegscheibe 19 plaziert, deren Innendurchmesser den Außendurchmesser des Gewindes 8 unterschreitet und die durch Walzen des Gewindes 8 unverlierbar mit der Schraube 1 verbunden ist.

Die Hülse 10 weist nahe ihrem kopfseitigen Ende 3 über ihren Umfang gleichmäßig verteilte radiale Öffnungen 13 auf, in die Vorsprünge 17 der Durchführung 14 eingreifen.

Durch die Unterlegscheibe 19 wird ein relativ großer Auflagedurchmesser für die Stirnseite der Durchführung 14 sichergestellt, wobei Probleme einer Flanschausbildung an der Hülse 10 entfallen. Die Hülse 10 kann wiederum mit dem Material der Durchführung 14 umspritzt sein, welches durch die Öffnungen 13 in die Hülse 10 eindringt und dort einzelne, nach innen stehende Vorsprünge 17 oder Noppen bildet. Die Vorsprünge 14 liegen an dem oberen Schaftabschnitt 6 an. Sie befestigen die Hülse 10 auf der Schraube 1, indem sie hinter das Gewinde 8 schnappen, wobei die Schraube in axialer Richtung der Hülse 10 verschiebbar bleibt.

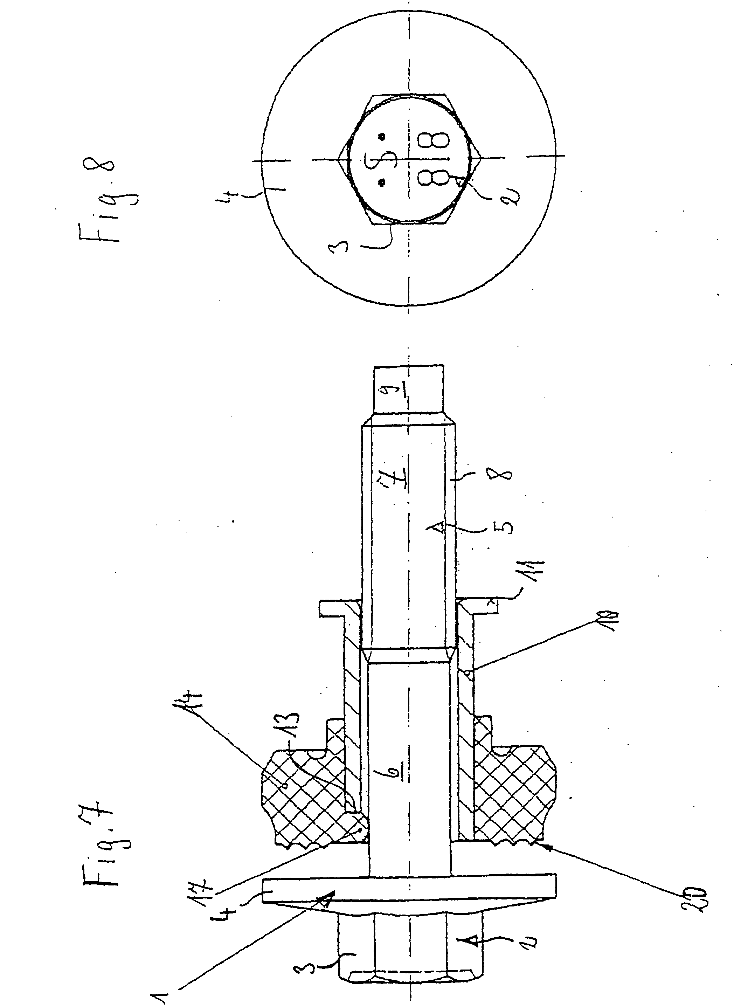

Gemäß Fig. 7 und 8 hat die Schraube 1 einen Kopf 2, dessen Klemmscheibe 4 einen größeren Durchmesser als bei den vorherigen Ausführungsformen aufweist. Die Hülse 10 ist wie in den Fig. 5 und 6 lediglich mit einem Fußflansch 12 und mehreren Öffnungen am kopfseitigen Ende ausgestaltet. Auch die Durchführung 14 entspricht weitgehend derjenigen des vorherigen Ausführungsbeispieles. Sie hat ebenfalls die Öffnungen 13 durchgreifende Vorsprünge 17, die auf dem gewindefreien Schaftabschnitt 16 anliegen, wodurch eine axiale Verschiebbarkeit der Schraube 1 und Sicherung derselben in der Hülse 10 erreicht wird.

In einem weiteren Unterschied zur vorherigen Ausführung weist die elastomere Durchführung 14 an ihrer oberen Stirnfläche drei umlaufende Dichtlippen 20 auf, welche im eingebauten Zustand eine Abdichtung zwischen Schraube 1 und Hülse 10 gewährleisten.

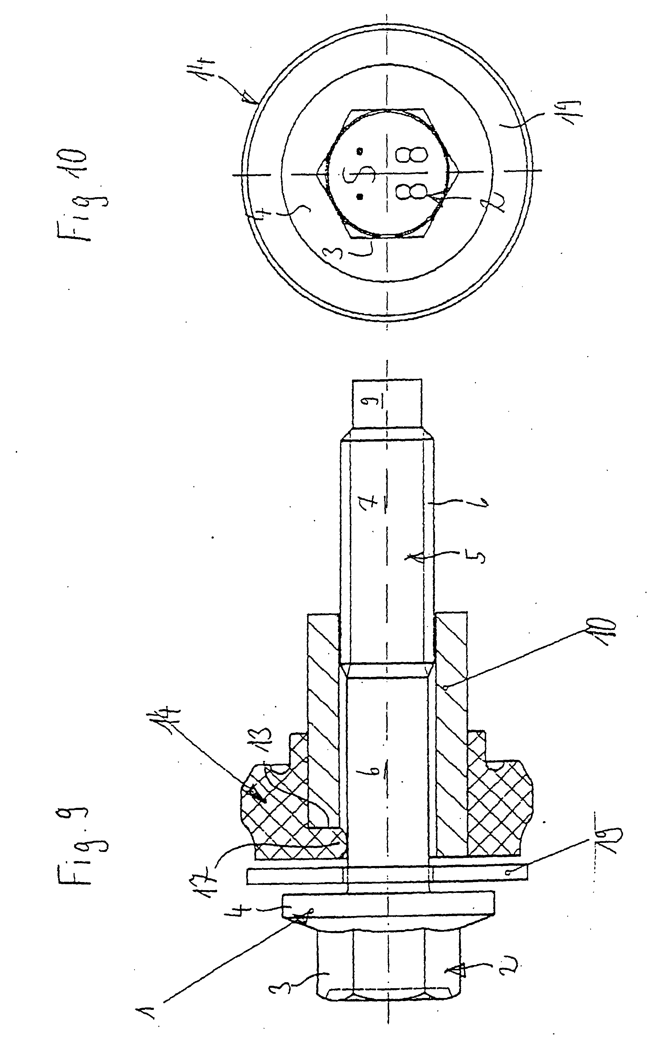

Die Ausführungsform der Fig. 9 bis 10 weist wie die der Fig. 5 und 6 auf dem oberen Schaftabschnitt 6 der Schraube 1 eine Scheibe 19 auf. Im Unterschied dazu ist die Hülse 10 jedoch als relativ dickwandiger Rohrabschnitt ausgebildet und auch nicht mit einem Fußflansch versehen.

Der Rohrabschnitt 10 weist jedoch entsprechend der Hülse an seinem kopfseitigen Ende radiale Öffnungen 13 auf. Dort ist er ebenfalls mit einer Durchführung 14 umspritzt, deren Vorsprünge 17 die Öffnungen 13 durchdringen und als einzelne Noppen am gewindefreien Schaftabschnitt 6 der Schraube 1 anliegen. Damit ist auch der Rohrabschnitt 10 auf der Schraube 1 gesichert und begrenzt axial zu dieser verschiebbar. Die Wanddicke des Rohrabschnittes 10 ist so gewählt, daß trotz fehlendem Fußflansch die notwendige Flächenpressung für das Drücken gegen ein zweites Werkstück gewährleistet ist. Eine Hülse 10 dieser Ausführung ist mit geringem fertigungstechnischem Aufwand herstellbar und reduziert die Kosten.

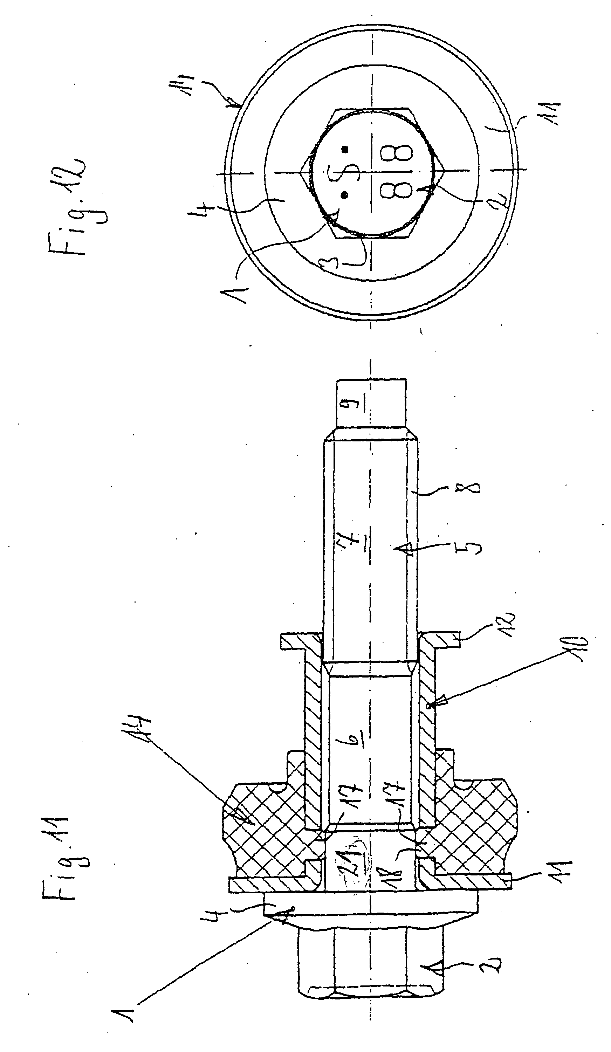

Die Ausführungsform der Fig. 11 und 12 stimmt weitgehend mit derjenigen der Fig. 1 bis 4 überein. Im Unterschied zu dieser weist jedoch die Schraube 1 zwischen Kopf 2 und einem verkürzten gewindefreien Schaftabschnitt 6 eine Verdickung 21 auf. Der Durchmesser der Verdickung 21 liegt zwischen dem Durchmesser des gewindefreien Schaftabschnittes 6 und dem Außendurchmesser des Gewindes 8.

Wenn die Hülse 10 mit ihrem großen Flansch 11 gegen die Unterseite der Klemmscheibe 4 geschoben ist, ruhen die Vorsprünge 17 bzw. ruht der umlaufende Ring 18 auf der Verdickung 21. Hierdurch wird der Ring 18 stärker zusammengepreßt und ein höherer Dichteffekt erzielt. Der Ring 18 stellt zugleich im Zusammenwirken mit dem Gewinde 8 eine begrenzte Verschiebbarkeit der Schraube 1 in der Hülse 10 sicher.

## Patentansprüche

1. Befestigerzusammensetzung zum Verbinden eines ersten Werkstückes mit einer Bohrung und eines zweiten Werkstückes mit einer Gewindebohrung, mit einer Schraube (1), die einen Kopf (2) und einen Schaft (5) aufweist, wobei der Schaft (5) einen gewindelosen oberen Schaftabschnitt (6) und einen unteren Schaftabschnitt (7) mit einem radial über den oberen Schaftabschnitt (6) vorstehenden Gewinde (8) aufweist, einer den Schaft (5) axial verschieblich aufnehmenden Hülse (10), einer die Hülse (10) aufnehmenden Durchführung (14) aus elastomerem Material und radial vorstehenden Mitteln (8, 17) zum Sichern der Schraube (1) in der Hülse (10), wobei die Hülse (10) nahe ihrem kopfseitigen Ende radiale Öffnungen (13) hat und die Durchführung (14) die Öffnungen mit Vorsprüngen (17) aus elastomerem Material durchgreift, die in die Hülse (10) hineinragen und im Bereich des oberen Schaftabschnittes (6) das Gewinde (8) der Schraube (1) hintergreifen, **dadurch gekennzeichnet, daß** die Durchführung (14) kopfseitig mindestens eine umlaufende Dichtlippe (20) hat, die sich gegen die Unterseite des Kopfes (2) legt.

2. Befestigerzusammensetzung nach Anspruch 1, **dadurch gekennzeichnet, daß** die Hülse (10) zwei Öffnungen (13) und die Durchführung (14) zwei Vorsprünge (17) hat.

3. Befestigerzusammensetzung nach einem der Ansprüche 1 oder 2, **dadurch gekennzeichnet, daß** die Durchführung (14) kopfseitig einen ringförmigen Abschnitt (15) und fußseitig einen manschettenförmigen Abschnitt (16) hat.

4. Befestigerzusammensetzung nach einem der Ansprüche 1 bis 3, **dadurch gekennzeichnet, daß** die Hülse (10) mit dem Material der Durchführung (14) umspritzt ist.

5. Befestigerzusammensetzung nach einem der Ansprüche 1 bis 4, **dadurch gekennzeichnet, daß** die Hülse (10) fußseitig einen Flansch (11, 12) hat.

6. Befestigerzusammensetzung nach einem der Ansprüche 1 bis 5, **dadurch gekennzeichnet, daß** der Kopf (2) an der Unterseite eine Klemmscheibe (4) hat.

7. Befestigerzusammensetzung nach einem der Ansprüche 1 bis 6, **dadurch gekennzeichnet, daß** die Hülse (10) ein Rohrabschnitt ist.

8. Befestigerzusammensetzung nach einem der Ansprüche 1 bis 7, **dadurch gekennzeichnet, daß** der Schaft (5) zwischen oberem Schaftabschnitt (6) und Kopf (2) eine Verdickung (21) hat, auf der sich die Vorsprünge (17) bei zum Kopf (2) geschobener Hülse (10) abstützen.

## Claims

1. A fastener assembly for joining a first workpiece to a bore and a second workpiece to a threaded bore, comprising a screw (1) which has a head (2) and a shank (5) with the shank (5) having a non-threaded upper shank portion (6) and a lower shank portion (7) including a thread radially projecting beyond the upper shank portion (6), a sleeve (10) receiving the shank (5) in an axially slidable fashion, a through bushing (14) of an elastomeric material that receives the sleeve (10), and radially projecting means (8, 17) for securing the screw (19 in the sleeve (10) with the sleeve (10) having radial apertures (13) near its head-sided end and the through bushing (14) gripping through the apertures by protrusions (17) of an elastomeric material that extend into the sleeve (10) and grip behind the thread (8) of the screw (1) in the area of the upper shank portion (6), **characterized in that** the through bushing (14) has at least one circumferential sealing lip (20) at the head-end side that comes to bear against the underside of the head (2).

2. The fastener assembly according to claim 1, **characterized in that** the sleeve (10) has two apertures (13) and the through bushing (14) has two protrusions (17).

3. The fastener assembly according to any one of claim 1 or 2, **characterized in that** the through bushing (14) has a ring-shaped portion (15) at the head-end side and a boot-shaped portion (16) at the bottom-end side.

4. The fastener assembly according to any one of claim 1 to 3, **characterized in that** the sleeve (10) is injection-molded around by the material of the through bushing (14).

5. The fastener assembly according to any one of claim 1 to 4, **characterized in that** the sleeve (10) has a flange (11, 12) at the bottom-end side.

6. The fastener assembly according to any one of claim 1 to 5, **characterized in that** the head (2) has a clamping washer (4) at the underside.

7. The fastener assembly according to any one of claim 1 to 6, **characterized in that** the sleeve (10) is a pipe section.

8. The fastener assembly according to any one of claim 1 to 7, **characterized in that** the shank (5), between the upper shank portion (6) and the head (2), has an enlargement (21) on which the protrusions (17) are supported when the sleeve (10) has been shifted to the head.

## Revendications

1. Dispositif de fixation destiné à assembler une première pièce munie d'un orifice avec une deuxième pièce munie d'un orifice taraudée, comprenant une vis (1), qui comporte une tête (2) et une tige (5), la tige (5) comportant une partie de tige supérieure (6) non filetée et une partie de tige inférieure (7) avec un filetage (8) en saillie radiale au-delà de la partie de tige supérieure (6), une gaine (10), dans laquelle la tige (5) est logée de manière mobile axialement, une douille de passage (14) en matériau élastomère, dans laquelle est logée la gaine (10), et des moyens (8, 17), en saillie radiale, pour le blocage de la vis (1) dans la gaine (10), la gaine (10) comportant des trous radiaux (13) à proximité de l'extrémité du côté tête et la douille de passage (14) s'engageant à travers lesdits trous avec des saillies (17) en matériau élastomère, qui pénètrent dans la gaine (10) et s'engagent derrière le filetage (8) de la vis (1) dans la zone de la partie de tige (6) supérieure, **caractérisé en ce que** la douille de passage (14) possède du côté tête au moins une lèvre d'étanchéité (20) périphérique, qui vient en appui contre la face inférieure de la tête (2).

2. Dispositif de fixation selon la revendication 1, **caractérisé en ce que** la gaine (10) comporte deux trous (13) et la douille de passage (14) possède deux saillies (17).

3. Dispositif de fixation selon la revendication 1 ou 2, **caractérisé en ce que** la douille de passage (14) comporte du côté tête un tronçon annulaire (15) et du côté pied un tronçon (16) en forme de manchette.

4. Dispositif de fixation selon l'une quelconque des revendications 1 à 3, **caractérisé en ce que** le matériau de la douille de passage (14) est injecté autour de la gaine (10).

5. Dispositif de fixation selon l'une quelconque des revendications 1 à 4, **caractérisé en ce que** la gaine (10) comporte du côté pied une collerette (11, 12).

6. Dispositif de fixation selon l'une quelconque des revendications 1 à 5, **caractérisé en ce que** la tête (2) comporte une rondelle de serrage (4) sur sa face inférieure.

7. Dispositif de fixation selon l'une quelconque des revendications 1 à 6, **caractérisé en ce que** la gaine (10) est une partie tubulaire.

8. Dispositif de fixation selon l'une quelconque des revendications 1 à 7, **caractérisé en ce que** la tige (5) comporte un renflement (21) entre la partie de tige supérieure (6) et la tête (2), sur lequel viennent en appui les saillies (17), lorsque la gaine (10) est insérée jusqu'au niveau de la tête (2).
